# EUROPEAN PATENT APPLICATION

(11) **EP 4 696 391 A1**
(43) Date of publication of application: **18.02.2026**
(21) Application number: 23932307.4
(22) Date of filing: 11.04.2023
(51) Int. Cl.: A63F 13/45

(54) **GAME SYSTEM CAPABLE OF AUTONOMOUSLY DETERMINING AND CHANGING BETTING TIME**

(71) Applicant: Jumbo Technology Co., Ltd., Taichung City 407, Taiwan (TW)
(72) Inventor: HSU, Shun Tsung, Taichung City 407, Taiwan (TW); WANG, Chang Yi, Taichung City 407, Taiwan (TW); LIN, Lien Yung, Taichung City 407, Taiwan (TW)
(74) Representative: 2K Patentanwälte Blasberg Kewitz & Reichel
(86) International application number: PCT/CN2023/087617
(87) International publication number: WO 2024/212110

(57) **Abstract**

The present invention relates to a game system capable of autonomously determining and changing a betting time, comprising at least one betting interface, at least one player operating element, at least one display element, a game result generation unit, a payment unit, and a game processing unit, wherein the game processing unit enables the at least one betting interface within a specified time, so that at least one player respectively performs betting on the at least one betting interface by means of the at least one player operating element, and the game processing unit determines whether a current game process of a round of game satisfies a specified condition; and when the specified condition is satisfied, the game processing unit changes the time length of the specified time according to a specified setting.

## Description

### TECHNICAL FIELD

The present invention relates to a game system, in particular to a game system capable of autonomously determining to change the betting time.

### BACKGROUND

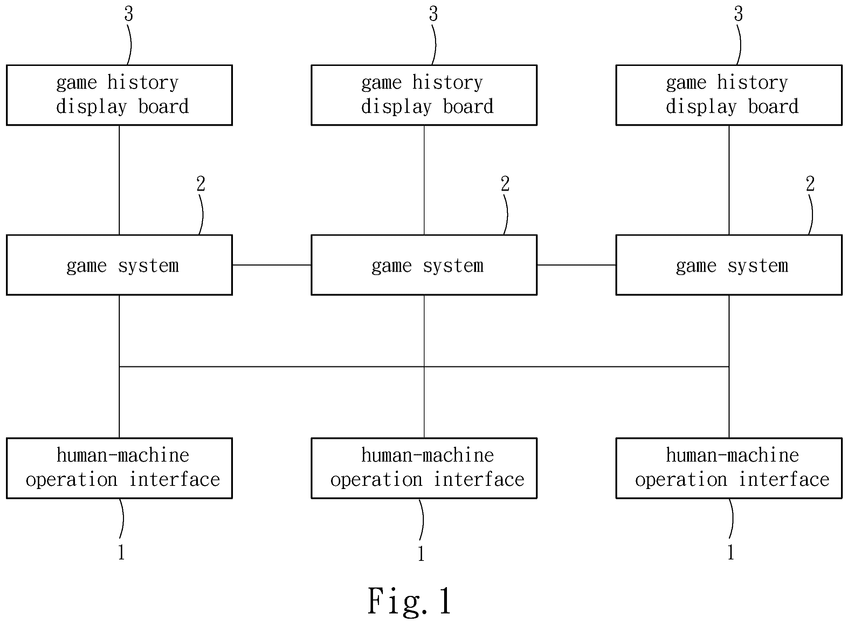

As shown in FIG. 1, a plurality of human-machine operation interfaces 1 may be linked to a plurality of game systems 2. Players may use the human-machine operation interface 1 to select a desired game system 2 and place bets on round-based games being operated by the desired game system 2. This setup overcomes spatial limitations and significantly increases the number of betting that can be placed by the players accommodated in each of the game systems 2. It also allows players to participate in different round-based games operated by the game systems 2 without having to physically move around, thereby enhancing the utilization rate of each of the game systems 2 and increasing overall business revenue.

In addition, each game system 2 is typically equipped with a corresponding game history display board 3. Game history display boards 3 can display historical results of the round-based games conducted by each of game systems 2, providing reference information for the players.

In general, the players tend to follow and place bets on popular games. The so-called popular games refer to the round-based games of the game systems 2 whose historical game results meet certain criteria, thereby prompting a high willingness among players to follow and bet. For example, in a game of baccarat, when either a banker or a player wins consecutively for a certain number of rounds (e.g., five or more), the game is considered a popular game. Alternatively, when a pattern emerges-such as alternating wins between the banker and the player-the players typically follow a trend and place bets until the pattern breaks.

However, when a player is using the human-machine interfaces 1 to participate in a game, the player is unable to know whether other available game systems 2 have become popular games, but can only view the game system 2 currently engaged with. As a result, to avoid missing out on popular games, the player must constantly monitor the game history display boards 3. Even when the player notices that a popular game has emerged, it is also prone to miss the betting time and not be able to place bets, which will lead to the operational revenue of the game systems 2 being reduced.

### BRIEF SUMMARY

A subject of the invention is to provide a game system capable of autonomously determining to change betting time, which changes the betting time of a player according to a game progress course, in order to increase the operational revenue of the game system.

To achieve the above-mentioned object, the invention provides a game system capable of autonomously determining to change betting time, which sequentially operates a plurality of round-based games for at least one player to participate in. Each of the round-based games includes a plurality of game results. The game system includes at least one betting interface, at least one player operation element, at least one display element, a game result generation unit, a payout unit, and a game processing unit.

The at least one display element displays real-time images of each of the round-based games. The at least one betting interface includes a plurality of betting areas corresponding to a plurality of game results, with each of the game results corresponding to at least one of the betting areas. The at least one betting interface, the at least one player operation element, and the at least one display element are set in a one-to-one correspondence. The at least one player operation element allows the at least one player to operate and place bets on a respective betting area, thereby generating a betting information. The game result generation unit produces the game results, and the payout unit makes payouts to the at least one player based on the betting information and the game results produced by the game result generation unit.

The game processing unit is connected to the at least one betting interface, the at least one player operation element, the at least one display element, the game result generation unit, and the payout unit. The game processing unit performs the following steps in each of the round-based games: step S1: initiating betting procedure, step S2: changing betting time procedure, Step S3: generating game result procedure, and step S4: paying out procedure.

Step S1: initiating betting procedure, the game processing unit initiates the at least one betting interface within a specified period of time, allowing the at least one player to place bets on the at least one betting interface via the at least one player operation element corresponded, thereby generating the betting information.

Step S2: changing betting time procedure, the game processing unit determines whether a game progression in a current round-based game meets a specified condition in the specified period of time by the game processing unit. If the specified condition is met, the game processing unit changes a duration of the specified period of time based on a specified setting.

Step S3: generating game result procedure, after the duration of specified period of time, the game processing unit instructs the game result generation unit to produce the game results.

Step S4: paying out procedure, after the game results are generated, the game processing unit instructs the payout unit to pay to the at least one player.

In summary, the present invention enables the game processing unit to determine whether the current game progression in the round-based game meets a specified condition. When the specified condition is met, the game processing unit changes the duration of the specified period of time based on the specified setting. Therefore, by appropriately configuring the specified condition and setting-such as setting a condition that a popular game is occurred and the specified setting is that the duration of the specified period of time is extended - which the duration for the players to place bets is extended when a popular game is occurred by determining by the game progression. As a result, the likelihood of the players missing a betting window is significantly reduced.

### BRIEF DESCRIPTION OF FIGURES

FIG. 1 is an organizational chart of a plurality of conventional game systems.
FIG. 2 is a block diagram of a game system of the present invention.
FIG. 3 is an external view of a game machine in an embodiment of the present invention.
FIG. 4 is a schematic diagram of a game screen in an embodiment of the present invention.
FIG. 5 is a schematic diagram of a game screen in another embodiment of the present invention.
FIG. 6 is a schematic diagram of a game screen in another embodiment of the present invention.
FIG. 7 is a schematic diagram of a game screen in another embodiment of the present invention.
FIGS. 8A-8B are schematic diagrams of game screens in another embodiment of the present invention.
FIG. 9 is a schematic diagram of the layout of game machines in an embodiment of the present invention.
FIG. 10 is a network architecture diagram of a game system of the present invention.

### List of Reference Signs

**Conventional Technique**
   1 human-machine operation interface
   2 game system
   3 game history display board
**Present Invention**
   10 game system
   11, 12 game machine
   20 betting interface
   201 specified period of time
   21 betting area
   22 delay option
   30 player operation element
   40 display element
   41 real-time image
   50 game result generation unit
   51 game progression
   60 payout unit
   70 game processing unit
   80 statistical unit
   90 network access unit
   91 network-connected computer device

### DETAILED DESCRIPTION

The detailed description and technical content of the present invention are described now as follows in conjunction with the drawings.

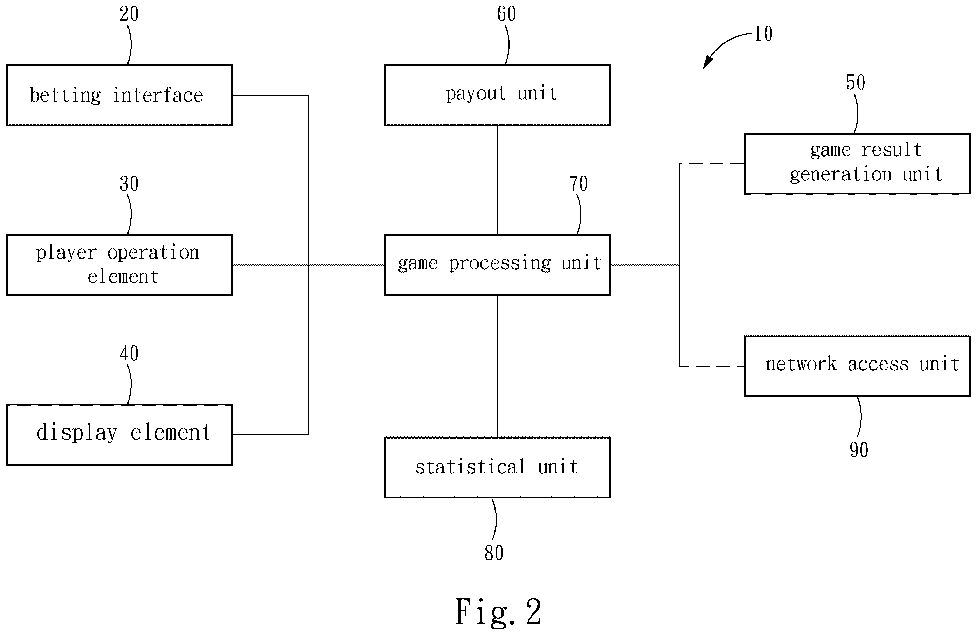

As shown in FIG. 2, FIG. 3 and FIG. 4, the present invention provides a game system 10 capable of autonomously determining to change the betting time, which sequentially operates a plurality of round-based games for at least one player to participate in. Each of the round-based games has a plurality of game results. The game system 10 is operated on at least one game machine 11. The game system 10 includes at least one betting interface 20, at least one player operation element 30, at least one display element 40, a game result generation unit 50, a payout unit 60, and a game processing unit 70. The at least one betting interface 20, the at least one player operation element 30, and the at least one display element 40 are set in a one-to-one correspondence.

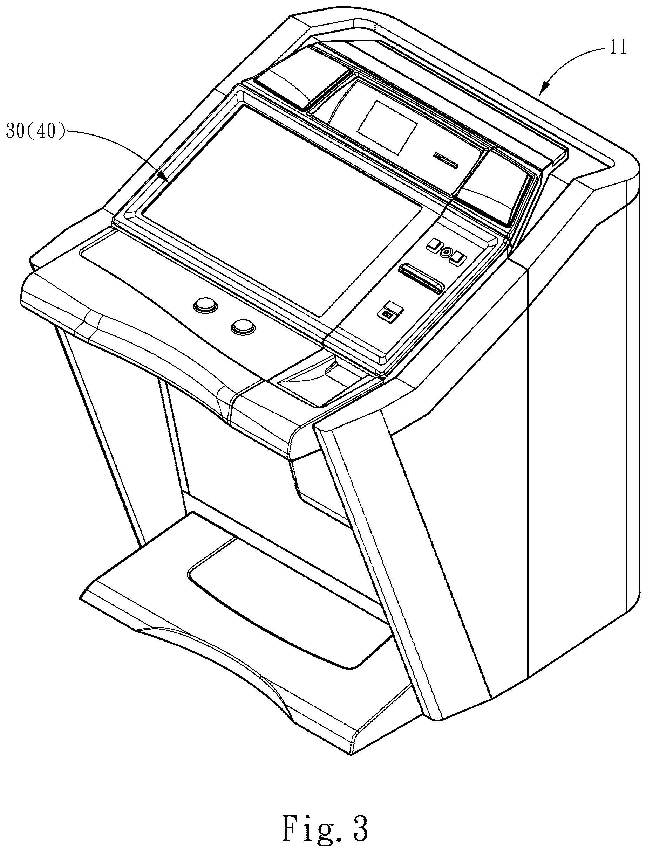

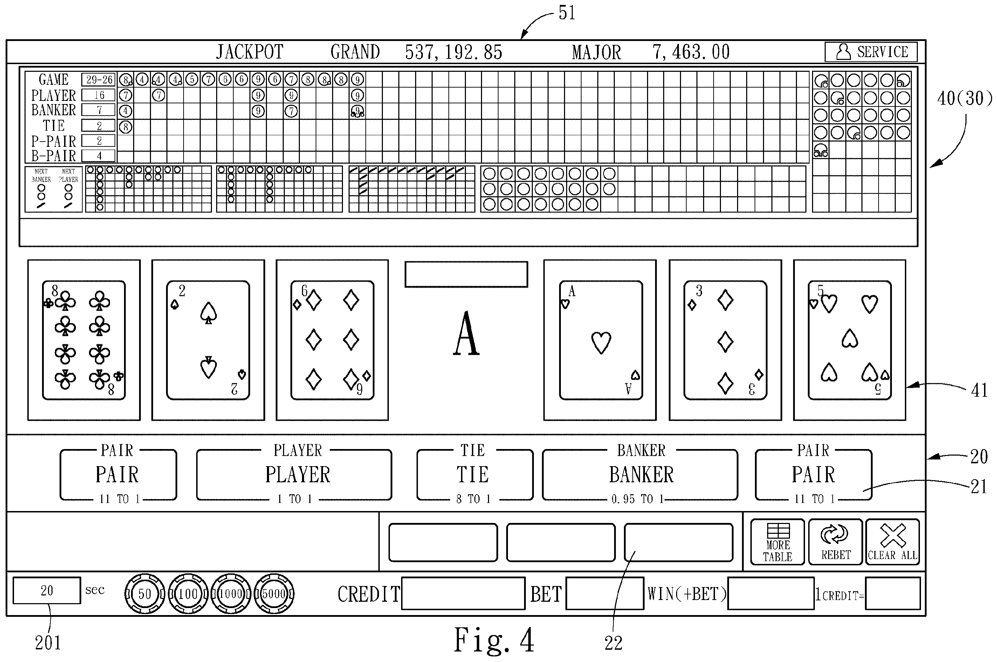

In one example, as shown in FIG. 3, one player operation element 30 and one display element 40 may be combined and implemented together to be a touch screen. As shown in FIG. 4, one betting interface 20 is composed of one player operation element 30 and the display element 40 together.

The at least one betting interface 20 includes a plurality of betting areas 21 corresponding to the plurality of game results, and each game result corresponds to at least one of the betting areas 21. In some circumstances, the game result may correspond to the plurality of betting areas 21.

Taking Baccarat as an example, if one of the game results shows that the banker's hand consists of a 9 of hearts and a 9 of spades, and the player's hand consists of a 9 of diamonds and a 9 of clubs, then the betting areas 21 corresponding to this game result are "TIE", "BANKER PAIR" and "PLAYER PAIR". The at least one player operation element 30 allows the at least one player to place bets on the plurality of betting areas 21, thereby generating a betting information.

The at least one display element 40 displays real-time images 41 of each of the round-based games, a game progression 51 in a current round-based game and the plurality of betting areas 21. The game progression 51 includes, but is not limited to, historical records in the current round-based game, a betting value of the at least one player, amounts of JACKPOT ^{┌} GRAND _{┘} and ^{┌} MAJOR _{┘} , etc. The game result generating unit 50 produces any one of the game results. The payout unit 60 pays to the at least one player according to the betting information and the game results produced by the game result generating unit 50.

As shown in FIG. 2, the game processing unit 70 is connected to the at least one betting interface 20, the at least one player operation element 30, the at least one display element 40, the game result generating unit 50 and the payout unit 60. The game processing unit 70 performs the following steps in each of the round-based games: step S1: initiating betting procedure, step S2: changing betting time procedure, step S3: generating game result procedure, and Step S4: paying out procedure.

As shown in FIG. 4, in step S1: initiating betting procedure. The game processing unit 70 initiates the at least one betting interface 20 within a specified period of time 201, allowing the at least one player to place bets on the at least one betting interface 20 via the at least one player operation element 30 corresponded, thereby generating the betting information.

In one example, an initial value of the specified period of time 201 is twenty seconds, which means that the at least one player has twenty seconds to place bets.

In step S2: changing betting time procedure, the game processing unit 70 determines whether the game progression 51 in the current round-based game meets a specified condition in the specified period of time 201. If the specified condition is met, the game processing unit 70 changes a duration of the specified period of time 201 based on a specified setting. The specified condition can be set freely according to the requirements, and the specified setting means the increase or decrease in the specified period of time.

In step S3: generating game result procedure, after the duration of specified period of time, the game processing unit 70 instructs the game result generation unit 50 to produce the game results. The definition of the game results produced by the game result generation unit 50 varies depending on types of the round-based games. For example, when the current round-based game is Baccarat, the game result generation unit 50 executes a poker card-dealing procedure, which may involve either a robotic arm dealing physical card to produce the game results, or a simulator using electronic random number generation to produce the game results.

In a case of a sic bo game, a dice-shaking action may be performed prior to step S1, while step S3 only involves revealing a dice to generate the game results. Alternatively, both the shaking and revealing of the dice may be executed during step S3.

If the current round-based game is roulette, an action of launching a game ball may be executed in step S1, and the game ball gradually comes to rest and falls into a specific pocket on the roulette wheel in step S3, thereby generating the game results.

In step S4: paying out procedure, after the game results are generated, the game processing units 70 instructs the payout unit 60 to pay to the at least one player.

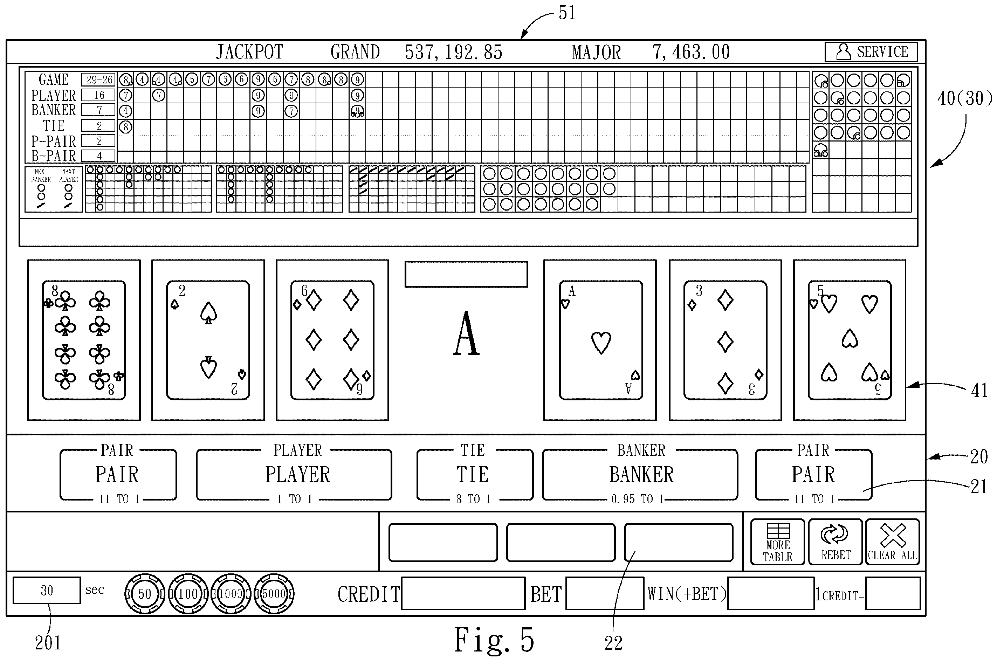

As shown in FIG. 2 and FIG. 5, in one embodiment, the present invention further includes a statistical unit 80 connected to the game processing unit 70. In each of the round-based games, the statistical unit 80 cumulatively counts all betting values of the at least one player on the betting areas 21 to form a cumulative betting amount. The specified condition is that the cumulative betting amount exceeds a specified threshold, and the specified setting is that the duration of the specified period of time 201 is increased; and when the specified condition is satisfied, the game processing unit 70 increases the duration of the specified time 201 in a next round-based game.

Preferably, the specified threshold is an average betting amount for the round-based games. For example, if the average betting amount is 4000 and if the betting amount of a specific round-based game is 5000, as shown in FIG. 5, the initial value of the specified period of time 201 in a next round-based game may be increased from 20 seconds to 30 seconds. That is, if all of the cumulative betting amount of the at least one player in the specified round-based game exceeds the average betting amount for the plurality of previous round-based games, it means that the at least one player currently online has a higher betting willingness as a whole. Therefore, in the next round-based game, a betting time can be increased to expect an increase in the operational revenue.

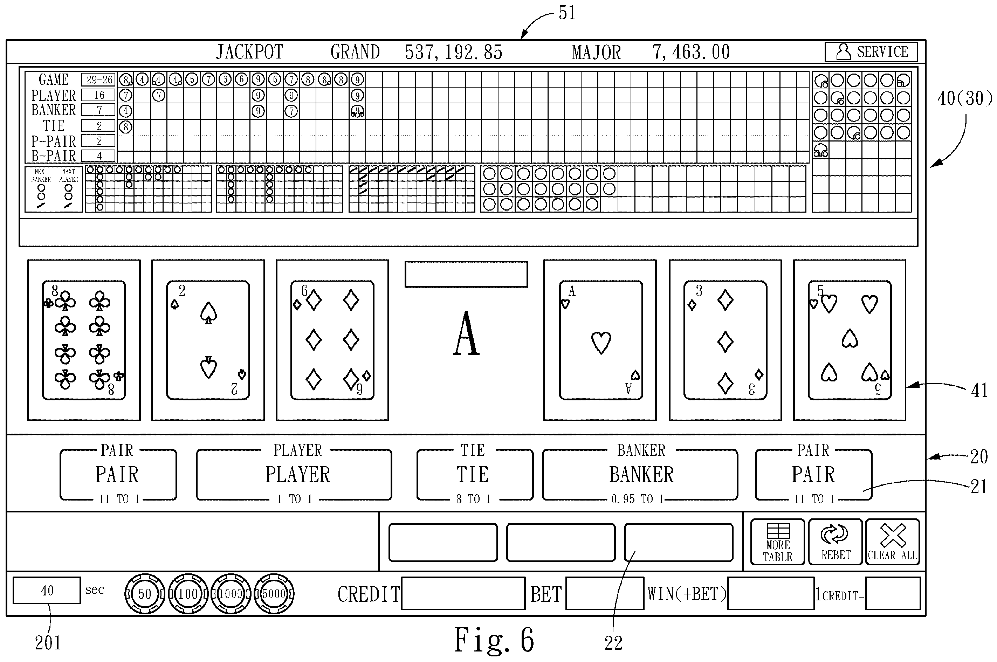

As shown in FIG. 6, in one embodiment, the initial value of the duration of the specified period of time 201 is determined by the game processing unit 70 according to the historical records of the game results of the round-based games. More specifically, when the historical records of the game results form a certain regularity (a popular game is formed), the at least one player will expect the certain regularity to continue. Therefore, the at least one player has a high willingness to follow up on the bets. In other words, it can be expected in this case that the at least one player will be more prone to place bets on the at least one betting interface 20, so that the initial value of the duration of the specified period of time 201 can be increased. As shown in FIG. 6, the initial value of the specified period of time 201 can be increased from twenty seconds to forty seconds, such that the betting time can be increased, thereby increasing the operational revenue.

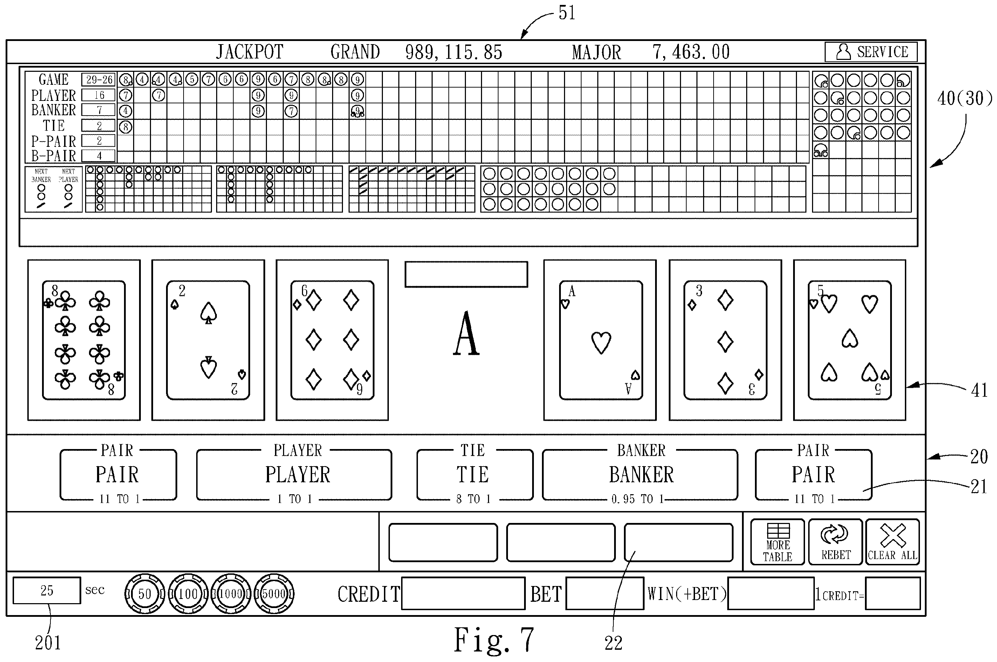

As shown in FIG. 7, in one embodiment, the initial value of the duration of the specified period of time 201 is determined by the game processing unit 70 according to an amount of a JACKPOT in the current round-based game. The mount of JACKPOT ^{┌} GRAND _{┘} or ^{┌} **MAJOR** _{┘} may affect the willingness of the players directly. Therefore, when the mount of JACKPOT ^{┌} GRAND _{┘} or ^{┌} MAJOR _{┘} exceeds a certain amount, the initial value of the duration of the specified period of time 201 can be increased to increase the betting time. As shown in FIG. 7, when the amount of JACKPOT ^{┌} GRAND _{┘} exceeds nine hundred thousand, the initial value of the specified period of time 201 can be increased from twenty seconds to twenty-five seconds.

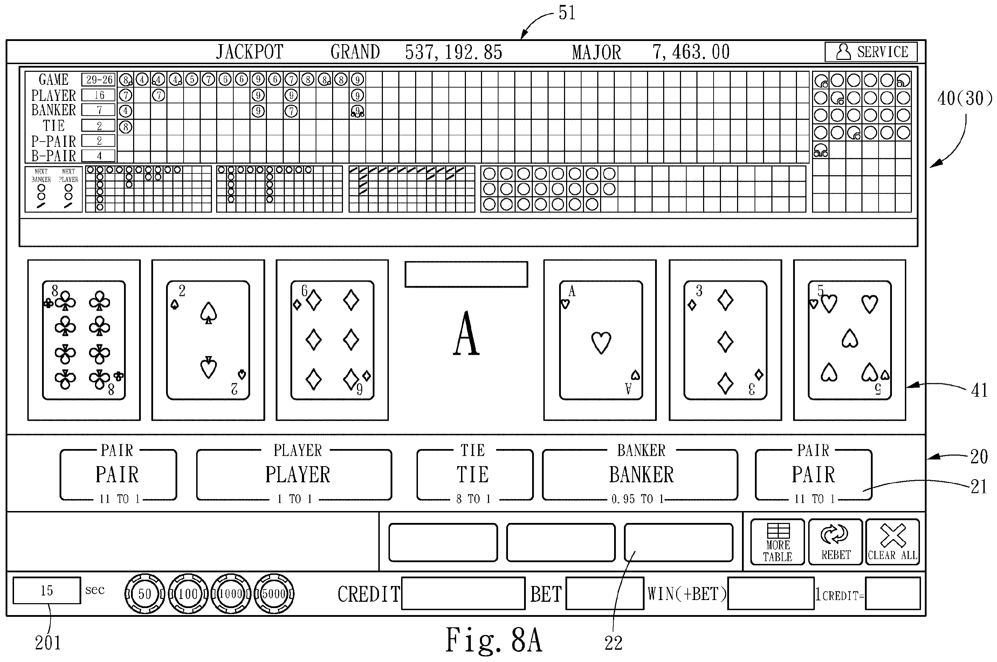

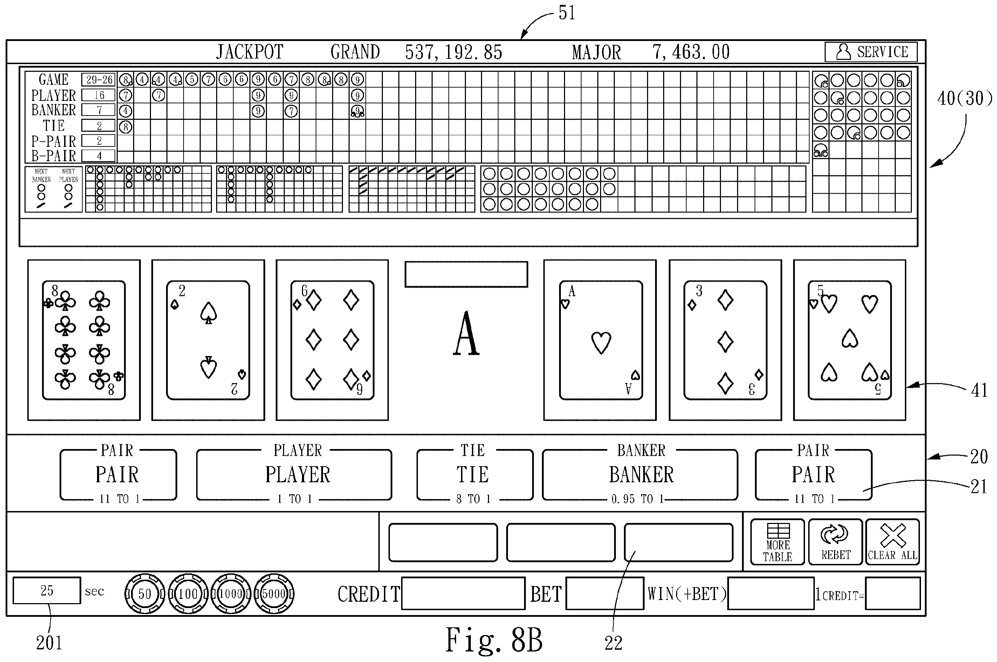

As shown in FIG. 8A and FIG. 8B, in one embodiment, the at least one betting interface 20 also includes a delay option 22. The specified condition is that the at least one player presses the delay option 22; and the specified setting is that the duration of the specified period of time 201 is increased. For example, as shown in FIG. 8A, when one of the players has 15 seconds left in the specified time 201, the delay option 22 is pressed. As shown in FIG. 8B, the specified period of time 201 will be increased from fifteen seconds to twenty-five seconds.

Preferably, the specified condition also includes that the game processing unit 70 determines that the game progression 51 satisfies a delay condition. More specifically, in each of the round-based games, when the at least one player presses the delay option 22, the game processing unit 70 may determine whether the game progression 51 satisfies the delay condition. When the game progression 51 satisfies the delay condition, the game processing unit 70 may increase the duration of the specified period of time 201.

In one embodiment, the delay condition is that the delay option 22 is pressed by the at least one player for the first time during the game progression 51. In this embodiment, when the at least one player needs more time to consider whether to bet, the at least one player can actively press the delay option 22 to request an increase in the duration of the specified period of time 201. A repeated delay can be avoided by determining whether the delay condition is satisfied.

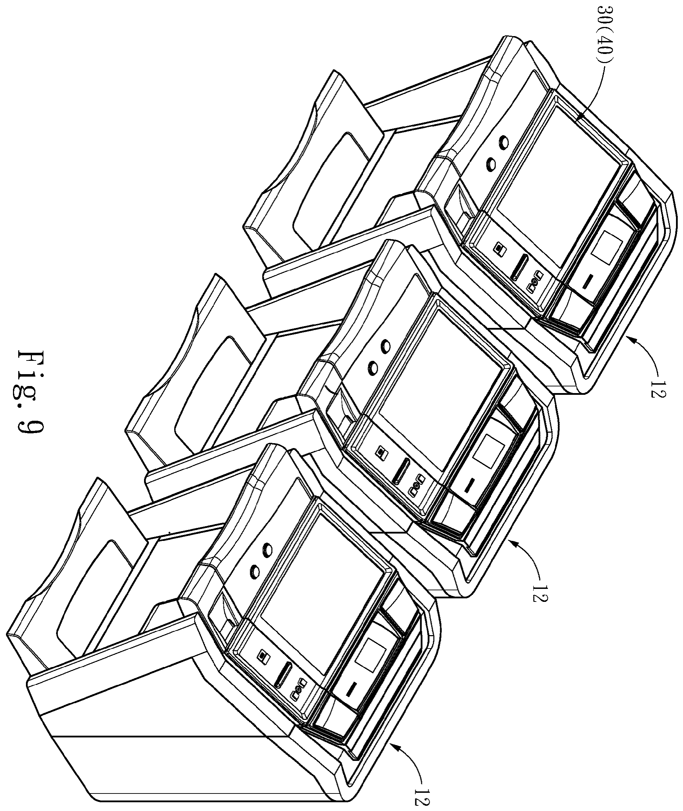

As shown in FIG. 2 and FIG. 9, in one embodiment, the at least one player operation element 30 and the at least one display element 40 are respectively provided a plurality of game machines 12 arranged together. The game machines 12 share the game result generation unit 50, the payout unit 60, the game processing unit 70 and the statistical unit 80. In this way, the at least one player can use different game machines 12 to participate in the same game simultaneously, thereby enhancing the overall enjoyment and gaming experience.

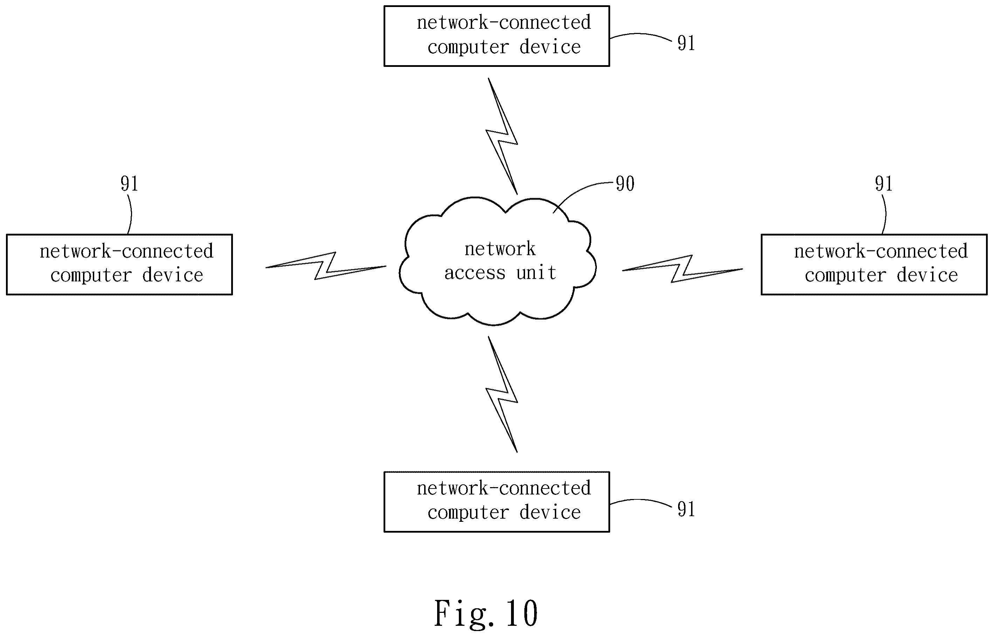

As shown in FIG. 2 and FIG. 10, in one embodiment, the present invention further includes a network access unit 90 connected to the game processing unit 70. The network access unit 90 allows a plurality of network-connected computer devices 91 to connect, with each of the network-connected computer devices 91 serving as the at least one betting interface 20, the at least one player operation element 30 and the at least one display element 40, respectively.

The network-connected computer devices 91 may be mobile computer apparatuses, such as smartphones or tablets; or personal computer apparatuses, such as PCs, laptops, or Macs. Under this architecture, the at least one player can remotely access the game processing unit 70 using the network-connected computer devices 91, taking full advantage of the internet's borderless connectivity to participate in gameplay from remote locations without being limited by physical venue constraints.

In summary, the present invention has at least the following advantages.

According to the present invention, whether the game progression in the current round-based game satisfies the specified condition is determined through the game processing unit; and when the specified condition is satisfied, the game processing unit changes the duration of the specified period of time according to the specified setting. Therefore, as long as the specified condition and the specified setting are appropriately set, the betting time of the players on the at least one betting interface will also be increased, thereby the likelihood of the players missing a betting window is significantly reduced.

The initial value of the duration of the specified period of time can be determined based on the historical records of the game results, the amounts of JACKPOT in the current round-based game, etc. For the round-based games where the at least one player is expected to have a high willingness to bet, the betting time can be increased to increase the operational revenue.

## Claims

1. A game system (10) capable of autonomously determining to change a betting time, providing a plurality of round-based games being operated sequentially for at least one player to play, each of the round-based game comprising a plurality of game results, and the game system comprising:
at least one display element (40), displaying real-time images (41) in each of the round-based games;
at least one betting interface (20), comprising a plurality of betting areas (21) corresponding to the plurality of game results, and one of the game results corresponding to at least one of the betting areas (21);
at least one player operation element (30), being set in a one-to-one correspondence with the at least one betting interface (20) and the at least one display element (40), and the at least one player operation element (30) being operated by the at least one player to place bets on a respective betting area (21) to generate a betting information;
a game result generation unit (50), producing any one of the game results;
a payout unit (60), paying out to the at least one player based on the betting information and the game results produced by the game result generation unit (50); and
a game processing unit (70), connected to the at least one betting interface (20), the at least one player operation element (30), the at least one display element (40), the game result generation unit (50) and the payout unit (60), and the game processing unit (70) performing following steps in each of the round-based games:
step S1: initiating betting procedure, initiating the at least one betting interface (20) within a specified period of time (201) by the game processing unit (70) to provide for the at least one player to place bets on the at least one betting interface (20) via the at least one player operation element (30) corresponded, thereby generating the betting information;
step S2: changing betting time procedure, determining whether a game progression (51) in a current round-based game meets a specified condition in the specified period of time (201) by the game processing unit (70), if the specified condition is met, changing a duration of the specified period of time (201) based on a specified setting by the game processing unit (70);
step S3: generating game result procedure, instructing the game result generation unit (50) to produce the game results by the game processing unit (70), after the duration of specified period of time (201); and
step S4: paying out procedure, instructing the payout unit (60) to pay to the at least one player by the game processing unit (70), after the game results are generated.

2. The game system of claim 1, wherein an initial value of the duration of the specified period of time (201) is determined by the game processing unit (70) according to historical records of the game results.

3. The game system of claim 1, wherein an initial value of the duration of the specified period of time (201) is determined by the game processing unit (70) according to an amount of a JACKPOT in a current round-based game.

4. The game system of claim 1, further comprising a statistical unit (80) connected to the game processing unit (70), the statistical unit (80) cumulatively counts all betting values of the at least one player on the betting areas (21) to form a cumulative betting amount in each of the round-based games, wherein the specified condition is that the cumulative betting amount exceeds a specified threshold, and the specified setting is that the duration of the specified period of time (201) is increased, and when the specified condition is satisfied, the game processing unit (70) increases the duration of the specified period of time (201) in a next round-based game.

5. The game system of claim 4, wherein the specified threshold is an average betting amount for the round-based games.

6. The game system of claim 1, wherein the at least one betting interface (20) further comprises a delay option (22), wherein the specified condition is that the at least one player presses the delay option (22), and the specified setting is that the duration of the specified period of time (201) is increased.

7. The game system of claim 6, wherein the specified condition further comprises that the game progression (51) satisfies a delay condition determined by the game processing unit (70).

8. The game system of claim 7, wherein the delay condition is that the delay option is pressed by the at least one player for a first time during the game progression (51).

9. The game system of claim 1, wherein the at least one player operation element (30) and the at least one display element (40) are respectively provided by a plurality of game machines (12) arranged together.

10. The game system of claim 1, further comprising a network access unit (90) connected to the game processing unit (70), and the network access unit (90) provided for a plurality of network-connected computer devices (91) to connect, with each of the network-connected computer devices (91) serving as the at least one betting interface (20), the at least one player operation element (30) and the at least one display element (40), respectively.

11. The game system of claim 10, wherein the network-connected computer devices (91) are selected from any one of mobile computer apparatuses or personal computer apparatuses.
